# EUROPÄISCHE PATENTANMELDUNG

(11) **EP 2 163 878 A1**
(43) Veröffentlichungstag der Anmeldung: **17.03.2010**
(21) Anmeldenummer: 08017749.6
(22) Anmeldetag: 09.10.2008
(51) Int. Cl.: G01N 1/10, G01N 1/40, F17C 13/00

(54) **Verfahren und Vorrichtung zur Probenahme kryogener Flüssigkeiten**

(30) Priorität: 11.09.2008 DE 102008046802
(71) Anmelder: Linde AG, 80331 München (DE)
(72) Erfinder: Meilinger, Matthias Dr., 82515 Wolfratshausen (DE)
(74) Vertreter: Imhof, Dietmar

(57) **Zusammenfassung**

Die Erfindung betrifft ein Verfahren und eine Vorrichtung zur kontinuierlichen Probenahme einer kryogenen Flüssigkeit aus einem Flüssigkeitsreservoir (3) und zur Verdampfung der Flüssigkeit in einem Verdampfer (20) für analytische Zwecke. Erfindungsgemäß wird mit einem Temperaturfühler (40), beispielsweise einem Thermoelement, am Eingang des Verdampfers (20) die Temperatur des in den Verdampfer (20) einströmenden kryogenen Fluidstroms gemessen. (Fig. 1)

## Beschreibung

Die Erfindung betrifft ein Verfahren und eine Vorrichtung zur kontinuierlichen Probenahme einer kryogenen Flüssigkeit aus einem Flüssigkeitsreservoir und zur Verdampfung der Flüssigkeit für analytische Zwecke.

Für die Steuerung des Betriebs von Anlagen zur Tieftemperaturzerlegung von Luft ist es von Bedeutung, die Zusammensetzung der in den Rektifikationskolonnen befindlichen flüssigen Gemische zuverlässig zu messen. Derartige kryogene Flüssigkeiten setzen sich meist aus Sauerstoff, Stickstoff, Argon oder auch Krypton und Xenon zusammen. Die kryogenen Flüssigkeiten weisen in der Regel eine Temperatur von weniger als -160°C auf.

Einerseits dient die Analyse der Überprüfung geforderter Produktzusammensetzungen. Andererseits werden die gewonnen Analysenergebnisse auch verwendet, um die Menge des Flüssigkeitsablasses oder bei diskontinierlichem Flüssigkeitsablass die optimale Frequenz zu bestimmen. Dieser Flüssigkeitsablass dient als Reinigungsmaßnahme (sog. Purging) der Sumpfflüssigkeiten von Rektifikationskolonnen. Hierfür muss der Gehalt an weniger flüchtigen Verunreinigungen wie Distickstoffmonoxid, Kohlenstoffdioxid oder Kohlenwasserstoffen bestimmt werden.

Um eine Analyse mit einem Analysengerät durchführen zu können, müssen die kryogenen Flüssigkeiten zunächst verdampft werden, da diese nur in gasförmigem Zustand und in der Regel bei Raumtemperatur den Analysengeräten zugeführt werden können.

Üblicherweise wird die kryogene Flüssigkeit über eine Probenahmeleitung aus dem Flüssigkeitsreservoir herausgeführt, anschließend im Wärmeaustausch in einer Verdampfereinrichtung verdampft und nachfolgend einem Analysengerät zugeführt. Ziel einer Probenahme mit anschließender Verdampfung ist, dass die Zusammensetzung der kryogenen Flüssigkeit und die der verdampften Probe zu jedem Zeitpunkt die gleiche ist. Voraussetzung für eine zuverlässige Probenahme und Probenvorbereitung ist, dass die entnommene Probe repräsentativ ist für die durchschnittliche Zusammensetzung der gesamten Flüssigkeit in dem Flüssigkeitsreservoir und dass die anschließende Verdampfung schnell und vollständig erfolgt. Hierzu muss die Flüssigkeit einem sehr hohen Temperaturgradienten ausgesetzt werden.

Häufig findet in der Leitung, die das Flüssigkeitsreservoir mit dem Verdampfer verbindet, eine vorgezogene Verdampfung statt, was zur Folge hat, dass die Flüssigphase und die Gasphase nicht zu jedem Zeitpunkt die gleiche Zusammensetzung aufweisen. Mit der Konsequenz, dass sich in flüssigem Sauerstoff schlecht lösliche Verbindungen wie Distickstoffmonoxid, Kohlendioxid oder Kohlenwasserstoffe bei Überschreitung ihrer Löslichkeitsgrenze an den Rohrleitungsinnenwänden abscheiden können. Diese Verunreinigungen werden dann stoßweise ausgetragen und führen zu stark schwankenden und schwer interpretierbaren Messergebnissen. Durch unkontrollierte Verdampfung und Ablagerungen ist die in dem Verdampfer ankommende Probe in ihrer Zusammensetzung nicht mehr repräsentativ für die Zusammensetzung der kryogenen Flüssigkeit in dem Flüssigkeitsreservoir. Somit sind Fehlanalysen häufig nicht durch das Analysengerät bedingt, sondern durch die Probenahme.

Um dies zu verhindern, wird beispielsweise in der DE 1 138 257 vorgeschlagen, den Abschnitt der Probenahmeleitung, der sich zwischen dem Flüssigkeitsreservoir und dem Verdampferrohr 6 befindet, mit einer Leitung zu umgeben, in der sich kryogene Flüssigkeit befindet. Hierdurch soll ein Verdampfen der kryogenen Flüssigkeit verhindert werden, da diese von außen durch ein Flüssigkeitsbad gekühlt ist. Nachteil dieser Vorrichtung ist jedoch ihr komplexer Aufbau. Zudem darf die Analysenleitung niemals geschlossen werden, da sonst Flüssigkeit an einer warmen Wand ansteht.

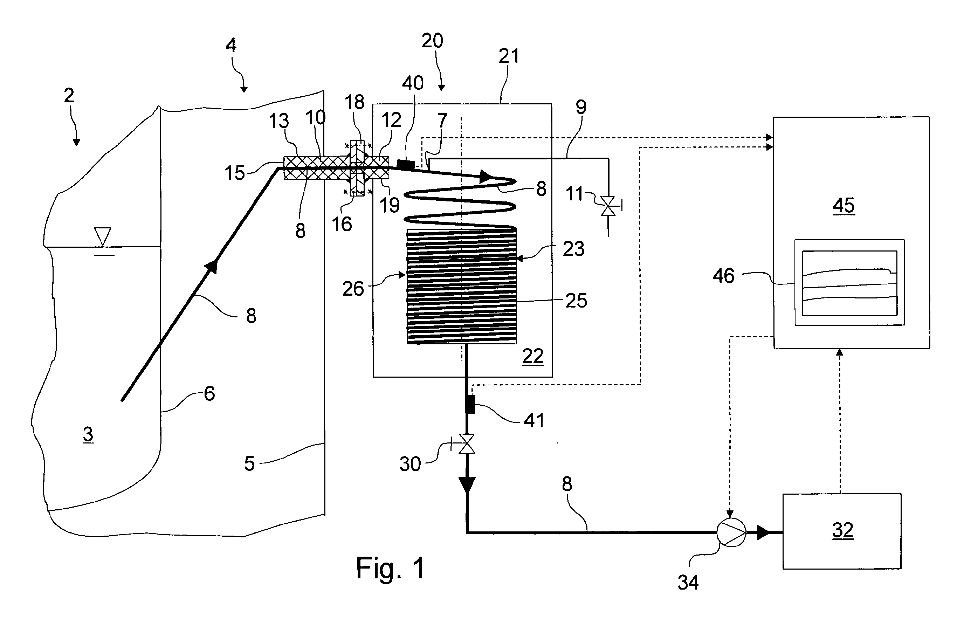

Um eine Verdampfung der kryogenen Flüssigkeit in der Probenahmeleitung zu vermindern, ist in Fig.1 der DE 603 07 713 T2 ein Abschnitt 4 der Probenahmeleitung mit einer Pumpe innerhalb der Cold Box versehen, die eine Zirkulation des kryogenen Fluids in der Leitung 4 bewirkt. Durch die Pumpe erfolgt jedoch ein unerwünschter Wärmeeintrag.

Um ein Absetzen von Verunreinigungen an der Innenwand der Probenahmeleitung zu verhindern, wird in der US 5,161,381 vorgeschlagen, die Strömung in der Probenahmeleitung durch bestimmte Strömungsquerschnittsflächen und Mittel zur Verengung des Strömungsquerschnitts am Eintritt zur Probenahmeleitung vorzusehen. Bei dieser Vorrichtung besteht jedoch das Problem, dass sich die verengte Probenahmeleitung durch Verunreinigungen zusetzen kann. Die Vorrichtung ist daher störanfällig.

Zudem besteht bei den Probenahmevorrichtungen des Standes der Technik allgemein das Problem, dass nicht stets mit Sicherheit bestimmt werden kann, ob gemessene Analysenwerte der Zusammensetzung der kryogenen Flüssigkeit entsprechen, oder durch Störungen bei der Probenahme, wie vorzeitige, diskontinuierliche Verdampfung oder Ablagerungen, verfälscht sind. Besonders sind Komponenten von einem Messfehler betroffen, die eine niedrige Löslichkeit in Flüssigsauerstoff aufweisen, wie auch Komponenten, die im Vergleich zu O₂ relativ wenig flüchtig sind, wie Kohlendioxid, Lachgas und Propan.

Die Aufgabe der vorliegenden Erfindung ist daher, ein Verfahren und eine Vorrichtung zur Probenahme einer kryogenen Flüssigkeit der eingangs genannten Art bereitzustellen, die eine zuverlässige Probenahme einer kryogenen Flüssigkeit aus einem Flüssigkeitsreservoir ermöglichen.

Die Aufgabe wird gelöst mit einem Verfahren nach Anspruch 1 und einer Vorrichtung nach Anspruch 7. Die abhängigen Ansprüche beziehen sich auf bevorzugte Ausführungsformen.

Demnach wird ein Verfahren zur kontinuierlichen Probenahme einer kryogenen Flüssigkeit aus einem Flüssigkeitsreservoir und zur Verdampfung der Flüssigkeit in einem Verdampfer für analytische Zwecke bereitgestellt. Erfindungsgemäß wird am Eingang des Verdampfers die Temperatur des in den Verdampfer einströmenden kryogenen Fluidstroms gemessen. Anhand der am Eingang des Verdampfers gemessenen Temperatur kann überprüft werden, ob eine Verdampfung der kryogenen Flüssigkeit wie gewünscht weitestgehend im Verdampfer stattfindet oder eine Verdampfung schon bereits vor Eintritt des kryogenen Fluidstroms in den Verdampfer vollständig erfolgt ist. Temperaturen im kryogenen Bereich bzw. im Bereich der Siedetemperaturen der Komponenten der kryogenen Flüssigkeit zeigen, dass eine Verdampfung weitestgehend im Verdampfer stattfindet. Eine Temperatur am Eingang zum Verdampfer in einem Temperaturbereich weit oberhalb der Siedetemperaturen der einzelnen Komponenten der kryogenen Flüssigkeit ist ein Indiz für eine vollständige Verdampfung der kryogenen Flüssigkeit auf dem Weg vom Flüssigkeitsreservoir zum Verdampfer, mit der Folge einer nicht repräsentativen Probengaszusammensetzung. Die für die Temperaturmessung zugrunde gelegte Siedetemperatur der kryogenen Flüssigkeit ist abhängig von ihrer Zusammensetzung und ihrem Druck.

Vorzugsweise wird zusätzlich am Ausgang des Verdampfers die Temperatur des aus dem Verdampfer austretenden Fluidstroms gemessen. Hierdurch wird gewährleistet, dass keine kryogene Flüssigkeit oder tiefkaltes Gas den Verdampfer verlässt und in das Analysengerät eintritt. Dies wäre beispielsweise bei einem Ausfall der Heizung des Verdampfers möglich.

Um eine vorzeitige, unerwünschte Verdampfung des kryogenen Fluids auf dem Weg vom Flüssigkeitsreservoir zum Verdampfer zu verhindern, wird die Wand der Probenahmeleitung in einem Abschnitt, der das Flüssigkeitsreservoir mit dem Verdampfer verbindet, vorzugsweise auf einer Temperatur gehalten, die in etwa der Temperatur der kryogenen Flüssigkeit entspricht. Dies kann durch eine geeignete Isolierung der Probenahmeleitung beispielsweise durch eine Vakuumisolation erreicht werden.

Bei dem erfindungsgemäßen Verfahren werden die am Eingang und/oder am Ausgang des Verdampfers gemessenen Temperaturwerte kontinuierlich an ein Prozessleitsystem zur Überwachung und/oder Steuerung einer das Flüssigkeitsreservoir umfassenden Vorrichtung weitergegeben. Vorteil hiervon ist, dass die erhaltenen Temperaturwerte zur Überwachung oder Steuerung der Vorrichtung unmittelbar verwendet werden können. Diese Temperaturwerte können über einen längeren Zeitraum im Prozessleitsystem abgespeichert werden, um im Nachhinein die Verlässlichkeit der Probenahme beurteilen zu können. Bei der Vorrichtung kann es sich beispielsweise um eine Rektifikationskolonne zur Tieftemperaturzerlegung von Luft handeln, die als Flüssigkeitsreservoir einen Sumpf mit kryogener Flüssigkeit umfasst. Vorzugsweise werden für die am Eingang des Verdampfers und/oder am Ausgang des Verdampfers gemessenen Temperaturwerte Alarmwerte vorgegeben. Dies kann beispielsweise derart erfolgen, dass bei Überschreiten eines festgelegten Alarmwertes für die am Eingang des Verdampfers gemessene Temperatur und/oder bei Unterschreiten eines festgelegten Alarmwertes für die am Ausgang des Verdampfers gemessene Temperatur ein akustisches und/oder optisches Signal erzeugt wird. So wird ein möglicherweise nicht zuverlässiges Analysenergebnis angezeigt.

Vorzugsweise wird der Volumenstrom des in den Verdampfer eintretenden kryogenen Fluidstroms in Abhängigkeit von der am Eingang des Verdampfers gemessenen Temperatur gesteuert. Durch Erhöhung des Volumenstroms an kryogenem Fluid in der das Flüssigkeitsreservoir und den Verdampfer verbindenden Leitung kann die Temperatur des in den Verdampfer einströmenden kryogenen Fluidstroms gesenkt werden.

Zur Ausführung des erfindungsgemäßen Verfahren wird eine Vorrichtung zur kontinuierlichen Probenahme einer kryogenen Flüssigkeit aus einem Flüssigkeitsreservoir und zur Verdampfung der entnommenen Flüssigkeit in einem Verdampfer für analytische Zwecke bereitgestellt. Erfindungsgemäß umfasst die Vorrichtung am Eingang des Verdampfers einen ersten Temperaturfühler, beispielsweise ein erstes Thermoelement, zur Messung der Temperatur des in den Verdampfer eintretenden kryogenen Fluidstroms.

Vorzugsweise befindet sich am Ausgang des Verdampfers ein zweiter Temperaturfühler zur Messung der Temperatur des aus dem Verdampfer austretenden Fluidstroms.

Vorzugsweise weist die erfindungsgemäße Vorrichtung eine Pumpe zur Steuerung des in den Verdampfer eintretenden kryogenen Fluidstroms auf. Vorteil hiervon ist, dass der Volumenstrom in der Probenahmeleitung unabhängig vom Innendruck im Flüssigkeitsreservoir eingestellt werden kann. Es besteht auch die Möglichkeit, durch Erhöhung des Volumenstroms mittels der Pumpe an kryogenem Fluid die Temperatur des in den Verdampfer einströmenden Fluids zu senken. Damit kann einer vorzeitigen Verdampfung der kryogenen Flüssigkeit auf ihrem Weg vom Flüssigkeitsreservoir zum Verdampfer entgegengewirkt werden. Vorzugsweise ist die Pumpe mit einer Steuereinrichtung verbunden, die ausgebildet ist, in Abhängigkeit von der am Eingang des Verdampfers gemessenen Temperatur die Pumpe anzusteuern. Durch die Steuereinrichtung, die mit dem Temperaturfühler und mit der Pumpe in Verbindung steht, kann der Volumenstrom des in den Verdampfer eintretenden kryogenen Fluids automatisch in Abhängigkeit von der am Eingang des Verdampfers gemessenen Temperatur gesteuert werden. Die Steuereinrichtung kann Teil des Prozessleitsystems sein.

Bei der erfindungsgemäßen Vorrichtung sind der erste Temperaturfühler und/ oder der zweite Temperaturfühler vorzugsweise jeweils an der Außenwand einer Probenahmeleitung angeordnet, die das zu verdampfende, kryogene Fluid bzw. das bereits verdampfte Fluid führt. Abweichend hiervon ist es jedoch auch möglich, die Temperaturfühler innerhalb der Probenahmeleitung anzubringen.

Die erfindungsgemäße Vorrichtung umfasst vorzugsweise einen Verdampfer mit einem Verdampfergehäuse, in welchem eine um einen Heizblock in Form einer Spirale gewickelte Rohrleitung angeordnet ist, die das zu verdampfende kryogene Fluid führt, wobei der erste Temperaturfühler stromaufwärts der Verdampferspirale innerhalb des Verdampfergehäuses angeordnet ist. Vorteil dieses Verdampfers ist, dass ein hoher Temperaturgradient zwischen dem Heizblock und der in der Rohrleitung fließenden kryogenen Flüssigkeit erzeugt werden kann, wodurch die kryogene Flüssigkeit rasch verdampft. Es können jedoch auch Verdampfer anderer Bauarten verwendet werden. Der zweite Temperaturfühler ist vorzugsweise stromabwärts der Verdampferspirale außerhalb des Verdampfergehäuses angeordnet.

Vorzugsweise wird die Erfindung in Anlagen zur rektifikativen Tieftemperaturzerlegung von Luft verwendet. Besonders im Falle einer rektifikativen Anreicherung von Sauerstoff in einer kryogenen Flüssigkeit, beispielsweise zur Voranreicherung von Krypton und Xenon in Flüssigsauerstoff, kann die Erfindung vorteilhaft angewendet werden. Bei der rektifikativen Anreicherung von Sauerstoff werden auch alle Luftkomponenten angereichert, die schwerer sind als Sauerstoff und nicht vorab adsorptiv aus der vorverdichteten Luft entfernt wurden, insbesondere Distickstoffmonoxid, Kohlendioxid und Kohlenwasserstoffe wie Methan, Ethan, Ethylen und Propan. Eine Anreicherung dieser Luftverunreinigungen über einen kritischen Wert hinaus muss aus Sicherheitsgründen vermieden werden. Bevor dieser kritische Wert erreicht wird, der für jede Komponente individuell ist, wird ein Teil des Säulensumpfes abgelassen (Purging). Deshalb ist die Kenntnis der exakten Konzentrationen der Komponenten in der kryogenen Flüssigkeit von großer Bedeutung. Das Purging richtet sich nach den ermittelten Konzentrationswerten kritischer Komponenten. Grundsätzlich sollte ein genügend großer Abstand zur Löslichkeitsgrenze bzw. die untere Explosionsgrenze der kritischen Komponenten aus Sicherheitsgründen eingehalten werden.

Die Erfindung sowie weitere Einzelheiten der Erfindung werden im Folgenden anhand von eines in Fig.1 dargestellten Ausführungsbeispiels näher erläutert.

Fig. 1 zeigt in einer schematischen Darstellung eine Vorrichtung zur Probenahme einer kryogenen Flüssigkeit aus dem Sumpf 3 einer Rektifikationskolonne 2, die zur Voranreicherung von Krypton und Xenon in Flüssigsauerstoff dient. Die Rektifikationskolonne 2 ist Teil einer Anlage zur Tieftemperaturzerlegung von Luft. Fig. 1 zeigt einen Ausschnitt der Rektifikationskolonne 2 im Bereich des Sumpfes 3. Die Rektifikationskolonne 2 ist in einem Behälter 4, einer sog. Cold Box 4 angeordnet, von der in Fig. 1 ein Teil der Behälterwand 5 in Schnittansicht gezeigt ist. Der Raum zwischen dem Mantel 6 der Rektifikationssäule 2 und der Behälterwand 5 ist mit einem isolierenden Schüttmaterial, in der Regel Perlit ausgefüllt, was jedoch aus Gründen der Übersichtlichkeit in Fig. 1 nicht dargestellt ist.

Aus dem Sumpf 3 der Kolonne 2 ist eine Probenahmeleitung 8 herausgeführt. Diese verläuft zur Vertikalen geneigt nach oben ansteigend vom Mantel 6 der Kolonne 2 in Richtung der Behälterwand 5 der Cold Box 4. In einem der Behälterwand 6 nahen Bereich innerhalb der Cold Box 4 verläuft die Probenahmeleitung 8 dann waagrecht und ist aus der Cold-Box 4 herausgeführt. In diesem Durchbruchsbereich der Probenahmeleitung 4 durch die Behälterwand 5 ist die Probenahmeleitung 8 von einem Isoliermaterial 10 aus in diesem Beispiel Mineralwolle umgeben. Die Mineralwolle befindet sich in einem Rohrstück 13, durch die die Probenahmeleitung 8 geführt ist. An dem innerhalb der Cold Box 4 befindlichen Ende des Rohrstücks 13 ist das Rohrstück 13 durch einen Deckel 15 verschlossen. An dem außerhalb der Cold Box 4 liegenden Ende des Rohrstücks 13 ist ein Flansch 16 angeschweißt. Durch die Isolierung 10 kann die Wand der Probenahmeleitung 8 auch im wandnahen Bereich der Cold Box 4 in etwa auf einer Temperatur gehalten werden, die der Temperatur der durch die Leitung 8 fließenden kryogenen Flüssigkeit entspricht. Weiter zum Inneren der Cold Box 4 hin ist der Wärmeeintrag geringer, sodass über die Perlitschüttung hinaus keine weitere Isolierung der Probenahmeleitung 8 notwendig ist.

An den Flansch 16 ist über ein Rohrstück 19 mit einem angeschweißten Flansch 18 ein Verdampfertopf 20 angeschlossen. Der Verdampfertopf 20 umfasst ein Gehäuse 21 in dessen Innenraum 22 zentral ein zylinderförmiger Heizblock 23 angeordnet ist. Der Heizblock 23 ist elektrisch beheizbar und weist um seinen Umfang spiralförmig umlaufende Rillen 25 auf.

Ausgehend von dem Rohrstück 13 erstreckt sich die Probenahmeleitung 8 durch den mit einem Isoliermaterial 12 gefüllten Rohrstutzen 19 des Verdampfertopfes 20 hindurch. Unmittelbar nach Eintritt der Probenahmeleitung 8 in den Verdampfertopf 20 zweigt von der Probenahmeleitung 8 eine Nebenleitung 9 ab, die nach der Abzweigung 7 unmittelbar aus dem Innenraum 22 des Verdampfertopfes 20 nach außen geführt ist. Außerhalb des Verdampfertopfes 20 befindet sich an der Nebenleitung 9 ein Ventil 11, über das kryogene Flüssigkeit aus der Nebenleitung 9 entnommen werden kann. Im regulären Probenahmebetrieb ist das Ventil 11 geschlossen.

Im Innenraum 22 des Verdampfertopfes 20 ist die Probenahmeleitung 8 spiralförmig gewunden. Zunächst folgt ein unbeheizter Abschnitt der Probenahmeleitung, der sich vom Eintritt der Probenahmeleitung 8 in den Verdampfertopf 20 bis zum Heizblock 23 in mehreren Windungen erstreckt. Im Bereich des Heizblockes 23 ist die Probenahmeleitung 8 in den Rillen 25 geführt zu einer Spirale 26 gewunden, die im Weiteren als Verdampferspirale 26 bezeichnet wird. Die Rillen 25 bewirken einen engen und großflächigen Kontakt zwischen der Oberfläche des Heizblocks 23 und den Rohrwänden der Verdampferspirale 26. Im unbeheizten Abschnitt oberhalb des Heizblocks 23 ist die Leitung 8 weniger eng gewunden als im Bereich des Heizblocks 23. Der Innenraum 22 des Verdampfertopfes 20 ist mit einem Isoliermaterial, beispielsweise Mineralwolle gefüllt, was jedoch aus Gründen der Übersichtlichkeit der Zeichnung nicht dargestellt ist. Der Abzweig 7 der Nebenleitung 9 befindet sich noch vor dem ersten gebogenen Abschnitt der Probenahmeleitung 8.

Am unteren Ende des Heizblocks 23 verläuft die Probenahmeleitung 8 senkrecht nach unten aus dem Gehäuse 21 des Verdampfertopfes 20 heraus. Außerhalb des Verdampfertopfes 20 ist an der Probenahmeleitung 8 ein Ventil 30 angeordnet. Das Ventil 30 dient dem Verschließen der Probenahmeleitung außerhalb des Probenahmebetriebs.

Ausgehend von dem Verdampfertopf 20 verläuft die Probenahmeleitung 8 oft über hundert Meter zu einem Analysengerät 32, beispielsweise einem Kohlenwasserstoff (THC)-Analysator.

Im vorliegenden Beispiel einer Rektifikationskolonne zur Krypton-Xenon-Gewinnung wird von dem Analysengerät unter anderem der Gehalt an Kohlenwasserstoffen wie Methan, Ethan, Ethylen, Propan gemessen sowie der Gehalt an Lachgas N₂O und Kohlendioxid CO₂. In Abhängigkeit von den erhaltenen Messwerten wird die Menge des notwendigen Flüssigkeitsablasses (Purging) aus dem Sumpf 3 der Rektifikationskolonne 2 bestimmt. Aus Sicherheitsgründen muss eine Aufkonzentration dieser Stoffe im Sumpf 3 der Rektifikationskolonne 2 vermieden werden. Der Flüssigkeitsablass kann kontinuierlich oder diskontinuierlich erfolgen.

In dem Abschnitt der Probenahmeleitung 8, der sich zwischen dem Verdampfertopf 20 und dem Analysengerät 32 befindet, ist eine Pumpe 34 angeordnet sein.

Wie in Fig. 1 des Weiteren gezeigt ist, sind an der Probenahmeleitung 8 Temperaturfühler 40 und 41 angeordnet.

Ein erster Temperaturfühler 40 ist an der Außenwand der Probenahmeleitung 8 im Bereich zwischen dem Rohrsstück 19 und dem Abzweig 7 der Nebenleitung 9 angeordnet. Er ist innerhalb des Gehäuses 21 des Verdampfertopfes 20 angeordnet. Er misst die Temperatur des in der Probenahmeleitung 8 fließenden kryogenen Fluids am Eingang des Verdampfertopfes 20 noch vor der Verdampferspirale 26, in welcher die kryogene Flüssigkeit erhitzt durch den Heizblock 23 verdampft wird. Der Temperaturfühler 40 ist von dem Heizblock 23 weit entfernt und durch eine ausreichende Schicht an Isoliermaterial, die sich im Innenraum 22 des Verdampfertopfes befindet, getrennt, sodass die Temperaturmessung durch den Heizblock 23 nicht beeinflusst wird. Die Außenwand der Probenahmeleitung 8 weist im Eingangsbereich des Verdampfertopfes 20 in etwa die gleiche Temperatur wie das kryogene Fluid innerhalb der Probenahmeleitung 8 auf. Der Temperaturfühler 40, beispielsweise ein Thermoelement 40, muss daher nicht direkt mit dem Fluid in Kontakt stehen. Die indirekte Messung über die Außenwand der Probenahmeleitung 8 liefert zuverlässige Messergebnisse. Abweichend von der vorliegenden Ausführungsform ist es jedoch auch möglich, den Temperaturfühler 40 innerhalb der Rohrleitung 8 anzubringen.

Ein zweiter Temperaturfühler 41 ist an der Außenwand der Probenahmeleitung 8 unmittelbar nach deren Austritt aus dem Verdampfertopf 20 noch vor dem Ventil 30 angeordnet. Er misst die Temperatur des aus dem Verdampfertopfes 20 austretenden und in der Probenahmeleitung 8 fließenden, verdampften Fluidstroms. Auch hier ist eine Platzierung an der Außenwand der Probenahmeleitung und somit eine indirekte Messung ausreichend. Der Temperaturfühler 41 ist außerhalb des Verdampfergehäuses 20 angeordnet und somit der Heizblock 23 ausreichend von dem Temperaturfühler 41 beabstandet.

Die von den Temperaturfühlern 40 und 41 gelieferten Messwerte werden kontinuierlich an ein Prozessleitsystem 45 weitergegeben. Auf einem Bildschirm 46 werden die gemessenen Temperaturwerte beispielsweise in °C über der Zeit angezeigt.

Die von dem Analysengerät 32 gelieferten Messergebnisse werden ebenfalls kontinuierlich an das Prozessleitsystem 45 weitergegeben und können ebenfalls auf dem Bildschirm 46 zusammen mit den gemessenen Temperaturwerten angezeigt werden.

Während des Betriebs der Rektifikationskolonne 2 fließt ausgehend vom Sumpf 3 der Kolonne 2 kontinuierlich kryogene Flüssigkeit durch die Probenahmeleitung 8 in eingezeichneter Pfeilrichtung in den Verdampfertopf 20 ein. Die Temperatur der kryogenen Flüssigkeit am Eingang des Verdampfertopfes 20 wird kontinuierlich von dem Temperaturfühler 40 gemessen und an das Prozessleitsystem 45 weitergegeben. Misst der erste Temperaturfühler 40 Temperaturen im kryogenen Bereich von etwa -183°C bis etwa -100°C, so ist sichergestellt, dass eine Verdampfung der kryogenen Flüssigkeit weitgehend im Verdampfertopf 20 erfolgt, mit der Konsequenz einer korrekten Probenahme und damit einer nachfolgend möglichen korrekten Analyse. Für die von dem Temperaturfühler 40 gemessenen Temperaturen können Alarmwerte in Form von Temperaturgrenzwerten im Prozessleitsystem abgelegt werden, die ein Einströmen von einer zu warmen Probe und damit einen zweifelhaften Analysenwert bei der nachfolgenden Probenanalyse anzeigen.

Die kryogene Flüssigkeit wird in der Verdampferspirale 26 des Verdampfertopfes 20 verdampft. Der Heizblock 23 wird üblicherweise bei einer Temperatur von 50°C bis 60°C betrieben. Das Gas verlässt den Verdampfertopf 20 durch die Probenahmeleitung 8 nach unten. Der zweite Temperaturfühler 41 misst die Temperatur des austretenden Fluidstroms. Diese gemessenen Temperaturwerte werden kontinuierlich an das Prozessleitsystem 45 weitergeleitet. Mit dieser Temperaturmessung wird sichergestellt, dass kein tiefkaltes Gas oder sogar kryogene Flüssigkeit den Verdampfertopf 20 verlässt. Auch hier können im Prozessleitsystem Alarmwerte abgelegt werden, die anzeigen, wenn ein zu kaltes Fluid den Verdampfertopf 20 verlässt.

Nach Verlassen des Verdampfertopfes 20 strömt der Probenstrom durch die Probenahmeleitung 8 zum Analysengerät 32.

Falls der aus dem Sumpf 3 der Kolonne 2 fließende Probenstrom, der durch den Innendruck der Kolonne 2 bedingt ist, nicht ausreicht, um notwendige niedrige Eintrittstemperaturen am Temperaturfühler 40 zu gewährleisten, kann mithilfe der Pumpe 34 der Volumenstrom an kryogener Flüssigkeit in der Probenahmeleitung 8 erhöht werden. Die Pumpe 34 kann beispielsweise in einem Analysenraum untergebracht sein, in welchem sich auch das Analysengerät 32 befindet.

Zusätzlich zu der Temperaturmessung kann ein korrektes Analysenergebnis damit überprüft werden, dass über die Nebenleitung 9 durch Öffnen des Ventils 11 eine Flüssigprobe batchweise entnommen wird und in einem speziellen Flüssigprobenehmer druckverdampft wird.

## Patentansprüche

1. Verfahren zur kontinuierlichen Probenahme einer kryogenen Flüssigkeit aus einem Flüssigkeitsreservoir (3) und zur Verdampfung der Flüssigkeit in einem Verdampfer (20) für analytische Zwecke, **dadurch gekennzeichnet, dass** am Eingang des Verdampfers (20) die Temperatur des in den Verdampfer (20) einströmenden kryogenen Fluidstroms gemessen wird.

2. Verfahren nach Anspruch 1, **dadurch gekennzeichnet, dass** am Ausgang des Verdampfers (20) die Temperatur des aus dem Verdampfer (20) austretenden Fluidstroms gemessen wird.

3. Verfahren nach Anspruch 1 oder 2, **dadurch gekennzeichnet, dass** in einem Abschnitt einer Probenahmeleitung (8), der das Flüssigkeitsreservoir (3) mit dem Verdampfer (20) verbindet, die Wand der Probenahmeleitung (8) auf einer Temperatur gehalten wird, die in etwa der Temperatur der kryogenen Flüssigkeit entspricht.

4. Verfahren nach einem der vorangehenden Ansprüche, **dadurch gekennzeichnet, dass** die am Eingang und/oder am Ausgang des Verdampfers (20) gemessenen Temperaturwerte kontinuierlich an ein Prozessleitsystem (45) zur Überwachung und/oder Steuerung einer das Flüssigkeitsreservoir (3) umfassenden Vorrichtung weitergegeben werden.

5. Verfahren nach einem der vorangehenden Ansprüche, **dadurch gekennzeichnet, dass** bei Überschreiten eines festgelegten Alarmwertes für die am Eingang des Verdampfers (20) gemessene Temperatur und/oder bei Unterschreiten eines festgelegten Alarmwertes für die am Ausgang des Verdampfers (20) gemessene Temperatur ein akustisches und/oder optisches Signal erzeugt wird.

6. Verfahren nach einem der vorangehenden Ansprüche, **dadurch gekennzeichnet, dass** der Volumenstrom des in den Verdampfer (20) eintretenden kryogenen Fluidstroms in Abhängigkeit von der am Eingang des Verdampfers (20) gemessenen Temperatur gesteuert wird.

7. Vorrichtung zur kontinuierlichen Probenahme einer kryogenen Flüssigkeit aus einem Flüssigkeitsreservoir (3) und zur Verdampfung der entnommenen Flüssigkeit in einem Verdampfer (20) für analytische Zwecke, **dadurch gekennzeichnet, dass** sich am Eingang des Verdampfers (20) ein erster Temperaturfühler (40), insbesondere ein erstes Thermoelement (40), zur Messung der Temperatur des in den Verdampfer (20) eintretenden kryogenen Fluidstroms befindet.

8. Vorrichtung nach Anspruch 7, **dadurch gekennzeichnet, dass** sich am Ausgang des Verdampfers ein zweiter Temperaturfühler (41) zur Messung der Temperatur des aus dem Verdampfer (20) austretenden Fluidstroms befindet.

9. Vorrichtung nach Anspruch 7 oder 8, **gekennzeichnet durch** eine Pumpe (34) zur Steuerung des in den Verdampfer (20) eintretenden kryogenen Fluidstroms.

10. Vorrichtung nach einem der Ansprüche 7 bis 9, **dadurch gekennzeichnet, dass** die Pumpe (34) mit einer Steuereinrichtung (45) verbunden ist, die ausgebildet ist, in Abhängigkeit von der am Eingang des Verdampfers (20) gemessenen Temperatur die Pumpe (34) anzusteuern.

11. Vorrichtung nach einem der Ansprüche 7 bis 10, **dadurch gekennzeichnet, dass** der erste Temperaturfühler (40) und/ oder der zweite Temperaturfühler (41) jeweils an der Außenwand einer Probenahmeleitung (8) angeordnet sind, die das zu verdampfende, kryogene Fluid bzw. das bereits verdampfte Fluid führt

12. Vorrichtung nach einem der Ansprüche 7 bis 11, **dadurch gekennzeichnet, dass** der Verdampfer (20) ein Gehäuse (21) aufweist, in welchem eine um einen Heizblock (23) in Form einer Spirale (26) gewickelte Rohrleitung (8) angeordnet ist, die das zu verdampfende kryogene Fluid führt, wobei der erste Temperaturfühler (40) stromaufwärts dieser Verdampferspirale (26) innerhalb des Verdampfergehäuses (21) angeordnet ist.

13. Vorrichtung nach Anspruch 12, **dadurch gekennzeichnet, dass** der zweite Temperaturfühler (41) stromabwärts der Verdampferspirale (26) außerhalb des Verdampfergehäuses (21) angeordnet ist.

14. Anlage zur Tieftemperaturzerlegung von Luft aufweisend eine Vorrichtung nach einem der Ansprüche 7 bis 13.

15. Vorrichtung (2) zur rektifikativen Anreicherung von Sauerstoff in einer kryogenen Flüssigkeit, insbesondere zur Voranreicherung von Krypton und Xenon in Flüssigsauerstoff, aufweisend eine Vorrichtung nach einem der Ansprüche 7 bis 13.
